# EUROPÄISCHE PATENTANMELDUNG

(11) **EP 0 995 352 A1**
(43) Veröffentlichungstag der Anmeldung: **26.04.2000**
(21) Anmeldenummer: 99119754.2
(22) Anmeldetag: 06.10.1999
(51) Int. Cl.: A01D 43/08

(54) **Konditionierwalze und Verfahren zu deren Herstellung für Feldhäcksler**

(30) Priorität: 21.10.1998 DE 19848493
(71) Anmelder: Case Harvesting Systems GmbH, 01844 Neustadt (DE)
(72) Erfinder: Siemer, Alfred, 26689 Apen/Godensholt (DE)
(74) Vertreter: Müller, Lutz

(57) **Zusammenfassung**

Die Erfindung betrifft eine Konditionierwalze und Verfahren zu deren Herstellung für Feldhäcksler.
Dabei soll durch eine verbesserte Gestaltung der Konditionierwalze deren Konditioniereffekt erhöht, das Annahme- und Förderverhalten verbessert und ihre Antriebsleistung gesenkt werden. Darüber hinaus soll sie kostengünstig herstellbar und nach eingetretenem Verschleiß instandsetzbar sein.
Das wird erreicht, indem um die glatte Umfangsfläche (29) ihres zylindrischen Mantels (17) herum in quer zur Längsachse (23) der Konditionierwalze (12) ausgerichteten Ebenen untereinander beabstandete Leisten (30) befestigt sind, die eine äußere Profilierung (28) aufweisen.

## Beschreibung

Die Erfindung betrifft eine Konditionierwalze und ein Verfahren zu deren Herstellung für Feldhäcksler, die zum Zusammenwirken mit wenigstens einer weiteren Konditionierwalze einerseits zum Anschlagen von sich im Häckselgut befindender Körner zu deren besseren Verdauung nach der Futteraufnahme durch die Tiere und andererseits zur Zerstörung der Pflanzenfasern des Häckselgutes zur Begünstigung des Gärprozesses im Silo vorgesehen ist, nach den Merkmalen im Oberbegriff der Patentansprüche 1 und 10 bis 12.

An derartige Konditionierwalzen werden heute insbesondere bei leistungsstarken Feldhäckslern höchste technische Anforderungen bezüglich des erreichbaren Konditioniereffektes, der Laufruhe, der Störanfälligkeit, der Verschleißfestigkeit und der Minimierung der Antriebsleistung gestellt, da sie zur Verarbeitung der sehr hohen Häckselgutmassen mit einer Umfangsgeschwindigkeit von etwa 40 Meter pro Sekunde rotieren und bis zu 800 Millimeter breit sind. Zur Erfüllung dieser hohen technischen Anforderungen sind logischerweise kostenintensive Herstellungsverfahren anzuwenden.
Eine Ausführung einer Konditionierwalze ist mit der DE 88 04 590 U1 bekannt geworden, die einen außen verzahnten zylindrischen Mantel aufweist, dessen spitze Verzahnungen in Umfangsrichtung gesehen nebeneinander liegen und die sich über die gesamte Breite des zylindrischen Mantels in axialer Richtung der Konditionierwalze erstrecken. Stirnseitig ist der zylindrische Mantel mit inneren Ringkragen ausgestattet, in die Abschlußdeckel eingesteckt sind, deren Lagerzapfen den zylindrischen Mantel überragen. Beidseitig aufden Lagerzapfen befinden sich die Lager zur Befestigung der Konditionierwalze in ihrem Gehäuse. Alle diese Bauteile werden durch eine Zugstange, die in mittigen Bohrungen in den Abschlußdeckeln zentriert ist, zu einer Baueinheit zusammengefügt. Sehr weit verbreitet sind auch Konditionierwalzen mit analogen Verzahnungen am zylindrischen Mantel wie vorstehend beschrieben, wobei jedoch die mit Lagerzapfen ausgestatteten Abschlußdeckel mit dem zylindrischen Mantel verschweißt sind.
An beiden Konditionierwalzen ist der zu erreichende Konditioniereffekt zu bemängeln, da sie nicht aggressiv genug arbeiten. Um dennoch einen ausreichenden Konditioniereffekt zu erreichen, müssen die Unterschiede der Umfangsgeschwindigkeiten der zusammenwirkenden Konditionierwalzen sehr hoch gewählt werden, wodurch ein Teil der ohnehin sehr hohen Antriebsleistung als Blindleistung verloren geht. Aufgrund unzureichender Aggresivität müssen die Umfangsgeschwindigkeiten der Konditionierwalzen sehr hoch sein, um das Häckselgut besser anzunehmen und anschließend an das nachgeordnete Wurfgebläse weiter zu befördern, was mit einer weiteren Erhöhung der Antriebsleistung verbunden ist. Schließlich ist noch das ungleichmäßige Verschleißverhalten der Konditionierwalzen über ihre Breite gesehen zu bemängeln, da das Häckselgut bei einem hohen Masseangebot in axialer Richtung zwischen den Konditionierwalzen aufgrund der Ausbildung der Verzahnungen nahen ungehindert wandern kann. In der Regel sind dadurch die Seitenstücke des zylindrischen Mantels mehr als sein Mittelstück verschlissen.
Die wichtigsten Arbeitsgänge zur Herstellung dieses Typs Konditionierwalzen sind, daß zuerst der Außendurchmesser des zylindrischen Mantels und anschließend dessen stirnseitige inneren Ringkragen gedreht werden. Danach werden die Abschlußdeckel mit den Lagerzapfen eingeschweißt. Zur Beseitigung der durch das Schweißen entstandenen Spannungen folgt der Arbeitsgang Glühen. Nun werden die Verzahnungen durch Abwälzfräsen in die Oberfläche des zylindrischen Mantels eingearbeitet. Das anschließende Induktionshärten soll die Verschleißfestigkeit erhöhen und das Auswuchten die nötige Laufruhe bringen.
Der Hauptmangel dieses Herstellungsverfahrens liegt in der unzumutbar hohen Fertigungszeit für das Abwälzfräsen, wodurch hohe Herstellungskosten entstehen. Auch mit einem Mehrmaschineneinsatz bzw. einer Mehrmaschinenbedienung werden die Kosten nicht niedriger, weil dann die Anschaffungskosten für mehrere Maschinen aufzubringen sind.
Eine weitere Variante zum konstruktiven Aufbau einer Konditionierwalze für Feldhäcksler ist in der DE 43 04 763 A1 vorgestellt, die aus einem Tragteil zur Aufrahme aller Kräfte und einem daraufbefestigten Funktionsteil zur Erzeugung des Konditioniereffektes besteht. Dazu weist das als dünnwandiges und als zylindrischer Mantel ausgebildete Funktionsteil in Form von Vertiefungen bzw. Erhebungen ausgebildete Profile auf.
Da derartig ausgebildete Profile nicht aggressiv genug sein können, ist der Konditioniereffekt von vornherein unzureichend. Um diesen Mangel etwas zu vermindern, müssen auch diese Konditionierwalzen mit sehr unterschiedlichen und hohen Umfangsgeschwindigkeiten angetrieben werden. Die daraus resultierenden negativen Folgen einer hohen Antriebsleistung treffen deshalb hier ebenso wie bei der vorstehend beschriebenen Ausführung der Konditionierwalzen zu.
Analog verhält es sich mit dem Auftreten eines ungleichmäßigen Verschleißverhaltens der Profile über die gesamte Breite der Konditionierwalzen gesehen. Schließlich besteht noch die Gefahr des Lösens des Funktionsteils vom Tragteil, was zu schweren Folgeschäden führen kann.
Die Herstellung dieser Konditionierwalze beginnt mit der Herstellung des Tragteils, das aus einem zylindrischen Mantel mit daran angeschweißten Abschlußdeckeln und Lagerzapfen besteht. Ein nachfolgendes Glühen entfernt die durch das Verschweißen mi Tragteil aufgebauten Spannungen. Danach werden der zylindrische Mantel und die Lagerzapfen außenrund geschliffen und das fertige Tragteil ausgewuchtet. Für die Herstellung und die Verbindung des Funktionsteils mit dem Tragteil bieten sich mehrere Möglichkeiten an.
Einmal wird das zylindrische, hohle Funktionsteil aus einem außen profilierten Rohr oder einem profilierten Blech mit Innenabmessungen gebildet, die im wesentlichen den Außenabmessungen des Tragteils entsprechen. Das Funktionsteil wird konzentrisch aufdem Tragteil angeordnet und mit diesem verklebt, verschweißt, verlötet, vernietet, verschraubt oder durch eine andere Technik verbunden. Das Funktionsteil kann auch im erhitzten Zustand auf das Tragteil aufgeschoben und nach dessen Erkalten auf das Tragteil aufgeschrumpft werden. Eine zweite Möglichkeit ist, daß das Funktionsteil aus einem Rohr oder einem profilierten Blech mit Innenabmessungen ausgebildet wird, die größer sind als die Außenabmessungen des Tragteils. Dann wird das Funktionsteil konzentrisch zum Tragteil angeordnet und der Zwischenraum mit Polymerbeton oder einer gießbaren Kunststoffmasse ausgefüllt, die dann aushärtet.
Drittens kann auch das Funktionsteil konzentrisch in eine Vorrichtung mit einem Preß, Gieß-, Rüttel- oder Schmelzraum mit einer profilierten Wandung eingebracht werden, der mit einer formbaren Masse ausgefüllt wird, die anschließend erstarrt.
Wird das Funktionsteil aus Stahl oder einem anderen härtbaren Material hergestellt, wird es vor der Verbindung mit dem Tragteil gehärtet. Abschließend wird das Funktionsteil nach der Verbindung mit dem Tragteil rundgeschliffen.
Allein die Aufzählung dieser Arbeitsschritte läßt deutlich werden, daß dieses Herstellungsverfahren zeit- und kostenintensiv ist, was schwerpunktmäßig auf die paßgenaue Herstellung des Funktionsteiles, das Einbringen der Profile in die relativ dünnen Bleche des Funktionsteils, das Auswuchten des Tragteils, die Wärmebehandlungen des Trag- und Funktionsteils und letztendlich auf das abschließende Rundschleifen des Funktionsteils zurückzuführen ist.
Schließlich wäre noch aufeine weitere Ausführungsvariante einer Konditionierwalze nach der DE 41 30 606 hinzuweisen, die ebenfalls aus einem zylindrischen Mantel besteht, in dessenStirnseiten Abschlußdeckel mit Lagerzapfen eingeschraubt oder eingeschweißt sind. Der zylindrische Mantel besteht vorzugsweise aus Stahl. Seine Umfangsfläche ist mit spiralförmigen Profilen besetzt, so daß sich immer zwischen jedem Steg ein Tal befindet, die in der radialen Erstreckung 2 bis 10 Millimeter tief sind. Die Stege verlaufen auf der Umfangsfläche mit einer Steigung von 1,5 in axialer Richtung. Die radial außen liegenden Endbereiche der Stege können spitz, stumpf, trapezförmig oder sägezahnartig ausgebildet sein.
Eine derart profilierte Walze weist im Vergleich zu den beiden Konditionierwalzen nach der DE 88 04 590 U1 und der DE 43 04 763 A1 den schlechtesten Konditioniereffekt auf, da die Profilierung in Umfangsrichtung verläuft, wobei die Seitenflanken der Stege glatt sind, ganz gleich welches Querschnittsprofil sie aufweisen. Diese Tatsache ist auch die Ursache für das schlechte Annahme- und Förderverhalten derartiger Konditionierwalzen. Das wirkt sich besonders negativ auf die Antriebsleistung aus, wie es bereits vorstehend erläutert wurde.
Die Herstellung solcher Konditionierwalzen ist für den Grundkörper, bestehend aus dem zylindrischen Mantel und den Abschlußdeckeln mit den Lagerzapfen, analog wie bei den Konditionierwalzen nach der DE 88 04 590 U1 und der DE 43 04 763 A1. Danach wird die Profilierung auf einer Drehbank in die Umfangsfläche des zylindrischen Mantels eingedreht und anschließend oberflächengehärtet. Der letzte Arbeitsgang ist auch hier das Auswuchten. An diesem Herstellungsverfahren ist von Nachteil, daß die Fertigungszeit für das Drehen und damit die Herstellungskosten außerordentlich hoch sind. Des weiteren ist der Materialverlust sehr hoch, da einmal zur Gestaltung der Täler zwischen den Stegen das Material herausgedreht wird und damit verloren ist und zum anderen im Falle des Verschleißes der Profilierung die ganze Konditionierwalze ersetzt werden muß, da weder ihr zylindrischer Mantel ausgetauscht werden kann noch ein Ersatz der Profilierung möglich ist.

Deshalb liegt der Erfindung die Aufgabe zugrunde, eine Konditionierwalze und ein Verfahren für deren Herstellung für Feldhäcksler zu schaffen, die einen hohen Konditioniereffekt und ein gutes Annahme- und Förderverhalten für das Häckselgut aufweist, wofür eine relativ geringe Antriebsleistung ausreicht. Darüber hinaus soll sie kostengünstig herstellbar und nach eingetretenem Verschleiß ihrer Profilierung instandsetzbar sein.
Diese Aufgabe wird gemäß der Erfindung durch die Merkmale des 1. Patentanspruches und die auf das Herstellungsverfahren bezogenen selbständig schutzbgründenden Patentanspräche 10 bis 12 gelöst, wobei in den Unteransprüchen Merkmale aufgeführt sind, die diese Lösung in vorteilhafter Weise weiterentwickeln.
Durch die Anordnung der Leisten mit ihren äußeren Profilierungen auf der Umfangsfläche des zylindrischen Mantels in Ebenen annähernd oder exakt quer zur Längsachse der Konditionierwalze entsteht ein fester Kontakt zwischen den Profilierungen und dem Häckselgut in Rotationsrichtung der Konditionierwalze und auch in ihrer axialen Richtung.
Ein besonders fester Kontakt entsteht, wenn die Profilierung der Leisten aus unmittelbar nebeneinander angeordneten, spitzen Zacken besteht, deren Spitzen in Rotationsrichtung der Konditionierwalze gesehen gegenüber ihren Unterteilen voreilend ausgebildet sind.

Dabei hat es sich einmal bewährt, die Leisten in Form von geschlossenen und voneinander beabstandeten Ringen auszubilden.
Der gleiche Effekt tritt jedoch ein, wenn die Leisten in Form von Gewindegängen an der Umfangsfläche des zylindrischen Mantels befestigt sind. Bezüglich deren Anordnung und Steigung ergeben sich vielfältige Variationsmöglichkeiten, wie sie beispielhaft in den Patentansprüchen 6 und 7 aufgeführt sind.
Zusatzeffekte können noch erreicht werden, wenn die Variationsmöglichkeiten zusammenwirkender Konditionierwalzen bezüglich ihrer Steigungen bzw. ihrer Umfangsgeschwindigkeiten ausgeschöpft werden, weil dadurch deren Aggressivität und damit der Konditioniereffekt in Rotationsrichtung und auch in axialer Richtung der Konditionierwalzen wunschgemäß verwirklicht werden kann.
Damit sind die Vorteile einer mit solchen Konditiomerwalzen ausgestatteten Konditioniereinrichtung, daß durch die Aggressivität der Pofilierungen ein höherer Konditioniereffekt erreicht wird. Im Vergleich zu herkömmlichen Konditionierwalzen ist der gewünschte Konditioniereffekt mit einer geringeren Umfangsgeschwindigkeit und mit geringeren Unterschieden in den Umfangsgeschwindigkeiten zu erzielen, so daß die Antriebsleistung sinkt. Da sich darüber hinaus durch die erhöhte Aggressivität das Annahme- und Förderverhalten zusammenwirkender Konditionierwalzen für das Häckselgut ergibt, muß auch aus dieser Sicht die Antriebsleistung nicht so sehr hoch sein. Schließlich ist noch von Vorteil, daß die hohe Aggressivität der Profilierung ein axiales Verschieben des Häckselgutes zwischen zusammenwirkenden Konditionierwalzen verhindert, so daß ein bisher dadurch verursachter Verschleiß entfällt.
Durch das Befestigen einer langgestreckten und mit einer einseitigen Profilierung versehenen Leiste auf der Umfangsfläche eines zylindrischen Mantels entsteht eine Profilierung auf der gesamten Umfangsfläche der Konditionierwalze, wenn diese Leiste in Ebenen angebracht wird, die sich annähernd oder exakt quer zur Längsachse der Konditionierwalze erstrecken. Der Abstand zwischen den einzelnen Lagen der Leiste ist für deren Befestigung am zylindrischen Mantel vorgesehen.
An dieser Stelle soll zum Erkennen des Rahmens der Erfindung darauf verwiesen werden, daß diese nicht an eine spezielle Ausbildung des zylindrischen Grundkörpers der Konditionierwalze gebunden ist. Der kann anstelle eines zylindrischen Mantels ohne weiteres auch ein aus Vollmaterial bestehender zylindrischer Grundkörper sein, der außerdem irgendwie in Einzelteile demontierbar ist oder dessen zylindrischer Mantel ganz oder in Teilen austauschbar ist. Darüber hinaus ist der Erfindungsgedanke auch nicht an spezielle Befestigungsarten der Leiste gebunden oder an ein bestimmtes Material zu deren Herstellung.
Ein zweckmäßiges Verfahren besteht nach Anspruch 11 darin, in eine Leiste aus Vergütungsstahl einseitig eine Profilierung einzuarbeiten, die dann in besagten Ebenen an der Umfangsfläche des zylindrischen Mantels so angeschweißt wird, daß ihre Profilierung in radialer Richtung der Konditionierwalze gesehen nach außen zeigt. Danach wird diese Leiste zur Erhöhung der Verschleißfestigkeit der Profilierung einer Wärmebehandlung unterzogen.
Ein ebenso zweckmäßiges Verfahren nach Anspruch 12 besteht darin, eine Leiste aus hochfestem, vergüteten Feinkornbaustahl einzusetzen, weil diese mechanisch bearbeitet werden kann. Dieser Feinkornbaustahl ist auch ohne Vorwärmung schweißbar und besitzt bereits eine so hohe Verschleißfestigkeit, daß eine nachfolgende Wärmebehandlung nicht erforderlich ist.
Die Erfindung gilt ebenfalls für alle zur Zeit bekannten und zukünftig bekannt werdende Verfahren zum Herausarbeiten von Zacken oder sonstigen Profilierungen aus einer Leiste, wie das näher in Anspruch 14 ausgesagt ist. Analog ist es für die Herstellung einer gezackten Leiste nach den Ansprüchen 14 und 15.

Die Herstellungsverfahren nach den Ansprüchen 16 bis 19 erläutern umfassend praktische Ausführungsmöglichkeiten der Herstellung erfindungsgemäßer Konditionierwalzen mit einer dementsprechend ausgerüsteten herkömmlichen Drehmaschine, so daß es dafür keiner weiteren Erläuterung bedarf. Dort sind insbesondere detailliert die Verfahrensschritte zur Ausbildung der verschiedenen Möglichkeiten für die Lage der Leisten auf der Umfangsfläche des zylindrischen Mantels der Konditionierwalze niedergelegt, das heißt beispielsweise eine von einer Seite der Konditionierwalze ausgehende Leiste in Form von Gewindegängen, die bis zur anderen Seite reicht bzw. bis zur Mitte gehende Gewindegänge und auf der anderen Seite spiegelbildlich dazu angebrachte Gewindeleisten usw. Schließlich soll noch auf die Zweckmäßigkeit der Anwendung des SchutzgasLichtbogenschweißens für die Befestigung der Leisten auf der Umfangsfläche des zylindrischen Mantels nach Anspruch 20 hingewiesen werden, weil sich das in der Praxis besonders bewährt hat.
Da für die Ausbildung der Profilierung der Konditionierwalzen in den heute weit verbreiteten leistungsstarken Feldhäckslern Leisten in einer Länge von mehr als 50 m benötigt wird, bietet es sich an, die Leiste aus mehreren handlichen Stücken zusammenzusetzen, die nach der Lehre von Anspruch 21 verarbeitet werden.
Die erfindungsgemäßen Herstellungsverfahren weisen gegenüber den bisher bekannten Herstellungsverfahren eine deutlich niedrigere Fertigungszeit auf, weil es keine zeitaufwendige mechanische Bearbeitung mehr gibt und die Anzahl der Arbeitsschritte geringer ist. Darüber hinaus ist von Vorteil, daß im Falle eines Verschleißes der Profilierung der Konditionierwalzen möglich ist, diese mehrfach durch eine neue nach dem erfindungsgemäßen Herstellungsverfahren gefertigte zu ersetzen.

Die Erfindung soll nun anhand eines Ausführungsbespiels näher erläutert werden, wobei die einzelnen Figuren zeigen:
- Fig. 1:: die linke Seite eines selbstfahrenden Feldhäckslers als Teilschnitt durch die Längsmittelebene mit einer aus drei Konditionierwalzen bestehenden Konditioniereinrichtung
- Fig. 2:: einen Schnitt durch eine Konditionierwalze
- Fig. 3:: eine Ansicht auf eine Konditionierwalze mit einer in Form von Gewindegängen aufgesetzten Leiste mit einer äußeren Profilierung
- Fig. 4:: einen vergrößerter Ausschnitt B nach Fig. 3
- Fig. 5:: eine vergrößerte Ansicht A von den Zacken der Leisten nach Fig. 3

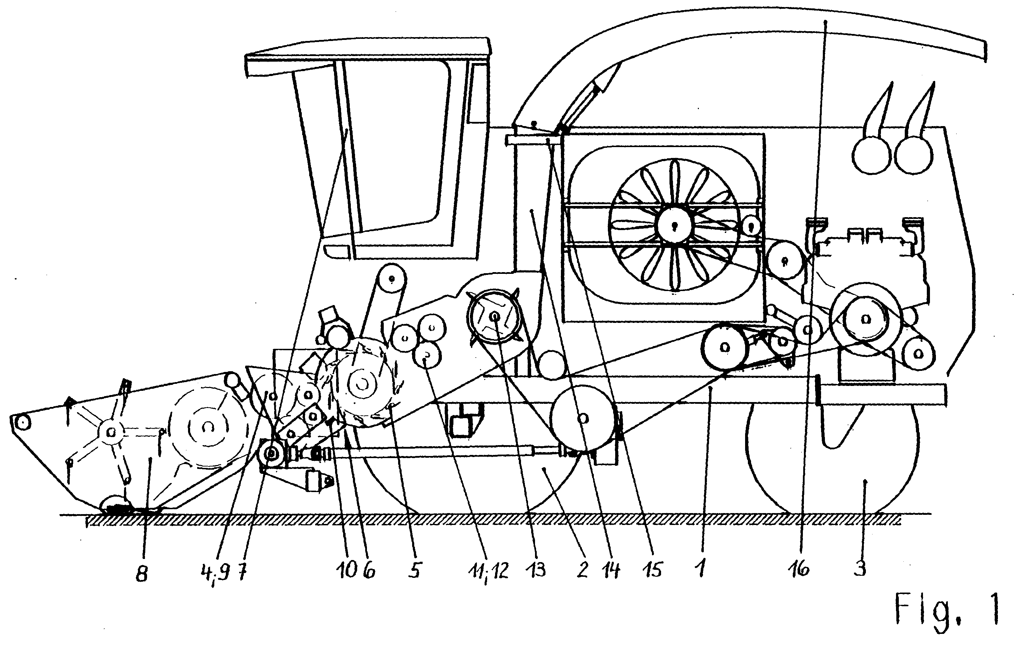

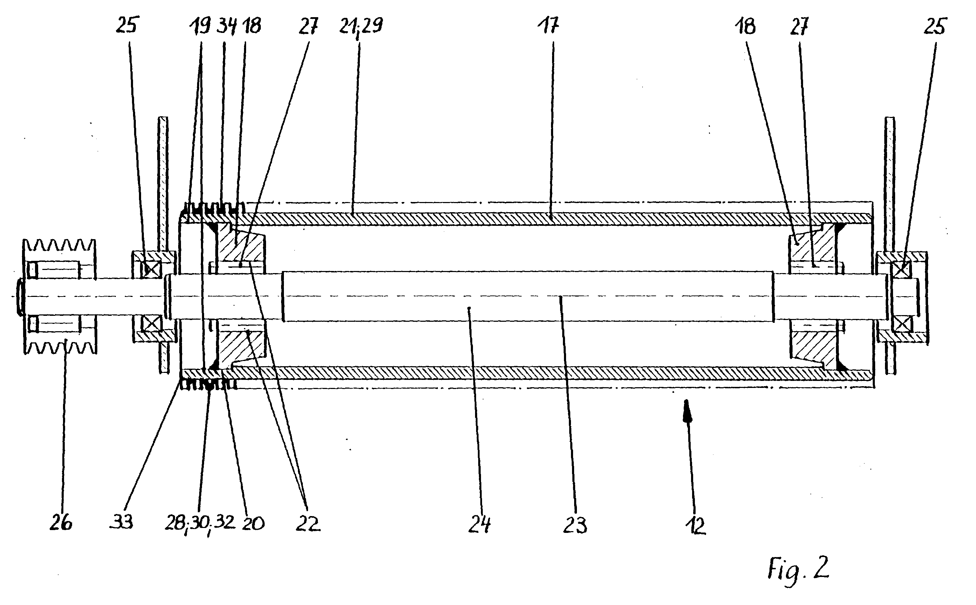

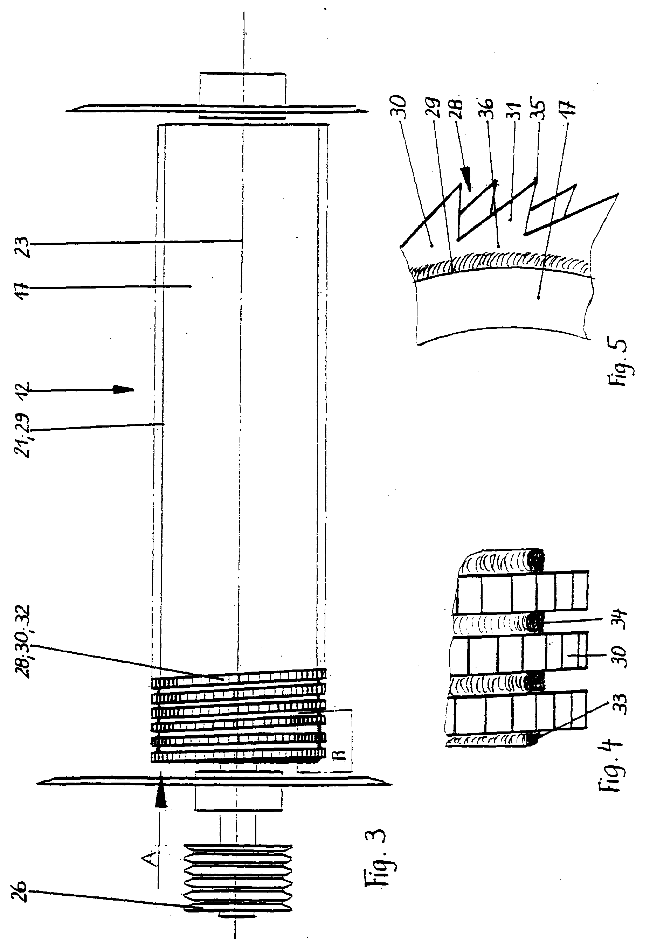

Der in der Fig. 1 dargestellte selbstfahrende Feldhäcksler weist einen Rahmen 1 auf, der von Vorderrädern 2 und Hinterrädern 3 getragen wird. Oberhalb des aus der Zuführeinrichtung 4 und der Häckseltrommel 5 bestehenden Häckselaggregates 6 befindet sich die Fahrerkabine 7, von der aus der Fahrer den vorn an der Zuführeinrichtung 4 angehangenen Adapter 8 gut einsehen kann. Bei diesem Adapter 8 kann es sich um einen Schwadaufnehmer, ein Feldfutter- bzw. Maisschneidwerk oder Spezialadapter zur Aufnahme und zum Mähen von landwirtschaftlichen Erntegütern aller Art handeln. Das Erntegut wird vom Adapter 8 an die Zuführeinrichtung 4 weitergeleitet, deren Einzugsorgane 9 es der Häckseltrommel 5 zuführen, die mit der ortsfesten Giegenschneide 10 zusammenwirkt.
Von dort aus gelangt das Häckselgut in eine Konditioniereinrichtung 11, die in diesem Ausführungsbeispiel aus drei zusammenwirkenden Konditionierwalzen 12 besteht. Danach werfen die Konditionierwalzen 12 das Häckselgut in das Gehäuse eines Wurfgebläses 13, so daß es problemlos den sich daran anschließenden Auswurfschacht 14 und den über einen Drehkranz 15 schwenkbeweglich angeschlossenen Auswurfbogen 16 mit hoher Geschwindigkeit passieren kann und schließlich von da aus aufeinen mitgeführten Anhänger gelangt. Die in den Figuren 2 und 3 dargestellte Konditionierwalze (12) besteht aus einem zylindrischen Mantel 17, in dessen Randbereichen sich je eine Stützscheibe 18 befindet.
Diese sind in Eindrehungen in dessen Innendurchmesser 19 eingesetzt und an ihren Außendurchmessern 20 mit dem zylindrischen Mantel 17 verschweißt.
Dabei ist einmal der eingedrehte Innendurchmesser 19 des zylindrischen Mantels 17 zu dessen Außendurchmesser 21 exakt koaxial ausgerichtet und zum anderen auch die in die Stützscheiben 18 eingebrachten Innenbohrungen 22. In diesen Innenbohrungen 22 ist eine sich in Richtung der Längsachse 23 erstrekkende einstückige Walzenachse 24 aufgenommen, deren Länge den zylindrischen Mantel 17 zur Aufnahme der Lager 25 und der Keilriemenscheibe 26 für ihren Antrieb überragt. Zur verdrehsicheren, lösbaren und gegen axiale Verschiebung gesicherten Verbindung zwischen der Walzenachse 24 und den Stützscheiben 18 befindet sich zwischen beiden Teilen ein selbstzentrierendes Konus-Spannelement 27, wie es beispielsweise von der RINGSPANN GmbH aus Bad Homburg angeboten wird und in deren Lieferprogramm-Katalog mit dem Druckvermerk 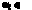 31 d.30.4/97" enthalten ist.
In den Figuren 2 bis 5 ist die Profilierung 28 der Konditionierwalze 12 zu sehen, die aufdie Umfangsfläche 29 des zylindrischen Mantels 17 aufgebracht ist. Sie wird in diesem Ausführungsbeispiel von einer Leiste 30 gebildet, die um die Umfangsfläche 29 des zylindrischen Mantels 17 herum aufgewickelt und mit diesem verschweißt ist. Ihre hohe Kante erstreckt sich dabei in Ebenen, die annähernd quer zur Längsachse 23 der Konditionierwalze 12 ausgerichtet sind. Ihr in radialer Richtung der Konditionierwalze 12 gesehener äußerer Bereich ist mit der Profilierung 28 versehen, die aus unmittelbar nebeneinanderliegenden, spitzen Zacken 31 besteht. Damit ist die Leiste 30 in Form von Gewindegängen 32 auf die Umfangsfläche 29 des zylindrischen Mantels 17 aufgewickelt, wobei zwischen benachbarten Gewindegängen 32 ein Abstand von ca. 3 Millimetern vorgesehen ist. Das Verschweißen des ersten Gewindeganges 32 der Leiste 30 mit dem zylindrischen Mantel 17 erfolgt dabei von der Außenseite mit einer I-Naht 33 und anschließend wird ab dem zweiten Gewindegang 32 die andere Seite des ersten Gewindeganges 32 mit dem zweiten Gewindegang 32 gemeinsam mit dem zylindrischen Mantel 17 mit einer Dreiflankennaht 34 verbunden. Letzteres setzt sich dann zwischen den nachfolgenden Gewindegängen 32 bis zum Ende der Konditionierwalze 12 fort.
In Figur 5 ist eine besonders vorteilhafte Ausbildung der Zacken 31 zu sehen, deren Spitzen 35 gegenüber ihren Unterteilen 36 in Rotationsrichtung der Konditionierwalze 12 gesehen voreilend ausgebildet sind.

### Bezugzeichenaufstellung

- 1: Rahmen
- 2: Vorderräder
- 3: Hinterräder
- 4: Zuführeinrichtung
- 5: Häckseltrommel
- 6: Häckselaggregat
- 7: Fahrerkabine
- 8: Adapter
- 9: Einzugsorgane
- 10: Gegenschneide
- 11: Konditioniereinrichtung
- 12: Konditionierwalze
- 13: Wurfgebläse
- 14: Auswurfschacht
- 15: Drehkranz
- 16: Auswurfbogen
- 17: zylinderischer Mantel
- 18: Stützscheibe
- 19: Innendurchmesser
- 20: Außendurchmesser
- 21: Außendurchmesser
- 22: Innenbohrung
- 23: Längsachse
- 24: Walzenachse
- 25: Lager
- 26: Keilriemenscheibe
- 27: Konus-Spannelement
- 28: Profilierung
- 29: Umfangsfläche
- 30: Leiste
- 31: Zacken
- 32: Gewindegänge
- 33: I-Naht
- 34: Dreiflankennaht
- 35: Spitzen
- 36: Unterteile

## Patentansprüche

1. Konditionierwalze für Feldhäcksler, die zum Zusammenwirken mit wenigstens einer zweiten Konditionierwalze vorgesehen ist, die einen zylindrischen Mantel mit Profilierungen an der Umfangsfläche aufweist, dadurch gekennzeichnet, daß um die glatte Umfangsfläche (29) des zylindrischen Mantels (17) herum in annähernd oder exakt quer zur Längsachse (23) der Konditionierwalze (12) ausgerichteten Ebenen untereinander beabstandete Leisten (30) befestigt sind, die eine äußere Profilierung (28) aufweisen.

2. Konditionierwalze nach Anspruch 1, dadurch gekennzeichnet, daß die äußere Profilierung (28) der Leisten (30) aus unmittelbar nebeneinander angeordneten, spitzen Zacken (31) besteht.

3. Konditionierwalze nach den Ansprüchen 1 und 2, dadurch gekennzeichnet, daß die Spitzen (35) der Zacken (31) in Rotationsrichtung der Konditionierwalze (12) gesehen gegenüber ihren Unterteilen (36) voreilend ausgebildet sind.

4. Konditionierwalze nach den Ansprüchen 1 bis 3, dadurch gekennzeichnet, daß die Leisten (30) in Form geschlossener Ringe ausgebildet sind.

5. Konditionierwalze nach den Ansprüchen 1 bis 3, dadurch gekennzeichnet, daß die Leisten (30) in der Form von Gewindegängen (32) an der Umfangsfläche (29) des zylindrischen Mantels (17) befestigt sind.

6. Konditionierwalze nach den Ansprüchen 1 bis 3 und 5, dadurch gekennzeichnet, daß die Steigung der in Form von Gewindegängen (32) angeordneten Leisten (30) auf den beiden Hälften der Konditionierwalze (12) spiegelbildlich symmetrisch ist.

7. Konditionierwalze nach den Ansprüchen 1 bis 3, 5 und 6, dadurch gekennzeichnet, daß die in Form von Gewindegängen (32) angeordneten Leisten (30) doppelgängig an der Umfangsfläche (29) des zylindrischen Mantels (17) befestigt sind.

8. Konditionierwalze nach den Ansprüchen 1 bis 7, dadurch gekennzeichnet, daß die Steigungen der Leisten (30) zusammenwirkender Konditionierwalzen (12) unterschiedlich groß sind.

9. Konditionierwalze nach den Ansprüchen 1 bis 8, dadurch gekennzeichnet, daß die Umfangsgeschwindigkeiten zusammenwirkender Konditionierwalzen (12) unterschiedlich groß sind.

10. Verfahren zum Herstellen einer Konditionierwalze für Feldhäcksler, die zum Zusammenwirken mit wenigstens einer zweiten Konditionierwalze vorgesehen ist, mit folgenden Verfahrensschritten:
a) in eine aus Flach- oder Bandmaterial bestehende langgestreckte Leiste (30) wird einseitig eine Profilierung (28) eingearbeitet,
b) die Leiste (30) wird um die Umfangsfläche (29) des zylindrischen Mantels (17) der Konditionierwalze (12) herum in annähernd oder exakt quer zur Längsachse (23) der Konditionierwalze (12) ausgerichteten Ebenen an diesem so befestigt, daß die Profilierung (28) in radialer Richtung der Konditionierwalze (12) gesehen außen ist und daß benachbarte Lagen der Leiste (30) untereinander beabstandet sind.

11. Verfahren zum Herstellen einer Konditionierwalz für Feldhäcksler, die zum Zusammenwirken mit wenigstens einer zweiten Konditionierwalze vorgesehen ist, mit folgenden Verfahrensschritten:
a) in eine aus Vergütungsstahl bestehende Leiste (30) aus Flach- oder Bandstahl wird einseitig eine Profilierung (28) eingearbeitet,
b) die Leiste (30) wird um die Umfangsfläche (29) des zylindrischen Mantels (17) der Konditionierwalze (12) herum in annähernd oder exakt quer zur Längsachse (23) der Konditionierwalze (12) ausgerichteten Ebenen gelegt und dabei gleichzeitig mit diesem so verschweißt, daß ihre Profilierung (28) in radialer Richtung der Konditioniewalze (12) gesehen außen ist und daß benachbarte Lagen der Leiste (30) untereinander beabstandet sind,
c) der zylindrische Mantel (17) mit den aufgeschweißten Leisten (30) wird zum Zwecke der Steigerung der Härte und damit der Erhöhung der Verschleißfestigkeit der Profilierung (28) einer Wäremebehandlung unterzogen.

12. Verfahren zum Herstellen einer Konditionierwalze für Feldhäcksler, die zum Zusammenwirken mit wenigstens einer zweiten Konditionierwalze vorgesehen ist, mit folgenden Verfahrensschritten:
a) in eine aus einem hochfesten, vergüteten Feinkornbaustahl bestehende Leiste (30) aus Flach- oder Bandstahl wird einseitig eine Profilierung (28) eingearbeitet,
b) die Leiste (30) wird um die Umfangsfläche (29) des zylindrischen Mantels (17) der Konditionierwalze (12) herum in annähernd oder exakt quer zur Längsachse der Konditionierwalze (12) ausgerichteten Ebenen gelegt und dabei gleichzeitig so mit diesem verschweißt, daß ihre Profilierung (28) in radialer Richtung der Konditionierwalze (12) gesehen außen ist und daß benachbarte Lagen der Leiste (30) untereinander beabstandet sind.

13. Verfahren nach den Ansprüchen 10 bis 12, dadurch gekennzeichnet, daß die Profilierung (28) der Leiste (30) aus unmittelbar nebeneinander angeordneten, spitzen Zacken (31) besteht, die durch Stanzen, Stoßen, Laserstrahl-, Wasserstrahl- oder Plasmaschneiden aus Flach- bzw. Bandstahl herausgearbeitet wird.

14. Verfahren nach den Ansprüchen 10 bis 12, dadurch gekennzeichnet, daß die Leisten (30) mit Profilierung (28) aus einer Blechtafel durch abwechselnde Zick-Zack- und Geradschnitte durch Laserstrahl-, Wasserstrahl- oder Plasmaschneiden herausgearbeitet werden.

15. Verfahren nach den Ansprüchen 10 bis 12, dadurch gekennzeichnet, daß die Leiste (30) mit ihrer Profilierung (28) in endloser Länge, beispielsweise durch Schmieden, Gießen oder Walzen hergestellt und anschließend auf die für eine Konditionierwalze (12) benötigte Länge abgeschnitten wird.

16. Verfahren nach den Ansprüchen 10 bis 15, gekennzeichnet durch die Verfahrensschritte:
a) der zylindrische Mantel (17) der Konditionierwalze (12) wird einenends im Drehmaschinenfutter einer herkömmlichen Drehmaschine verdrehfest aufgenommen und anderenends vom Reitstock abgestützt,
b) die Leiste (30) wird in einer tangential zur Umfangsfläche (29) des zylindrischen Mantels (17) ausgerichteten und am Werkzeugschlitten befestigten Führung aufgenommen, wobei sie mit ihrem vorderen Ende auf der glatten Umfangsfläche (29) des zylindrischen Mantels (17) an dessen dem Drehmaschinenfutter zugewandten Ende aufgelegt und daran so angeheftet wird, daß ihre Profilierungen (28) in radialer Richtung der Konditionierwalze (12) gesehen außen sind,
c) mit beginnender Rotation des Drehmaschinenfutters und einer gleichzeitigen Vorschubbewegung des Werkzeugschlittens in einer Richtung weg vom Drehmaschinenfutter wird die Leiste (30) in Form eines ersten Gewindeganges (32) auf die Umfangsfläche (29) des zylindrischen Mantels (17) aufgewickelt und dabei gleichzeitig von einem am Werkzeugschlitten angebrachten Schweißgerät an der dem Drehmaschinenfutter zugewandten Seite mit der Umfangsfläche (29) mit einer I-Naht (33) verschweißt,
d) nach Vollendung der ersten Umdrehung des zylindrischen Mantels (17) werden der erste Gewindegang (32) von der anderen Seite und der zweite Gewindegang (32) gleichzeitig mit der Umfangsfläche (29) des zylindrischen Mantels (17) mit einer Dreiflankennaht (34) verschweißt, was sich kontinuierlich zwischen allen weiteren Gewindegängen (32) bis an das andere Ende der Konditionierwalze (12) fortsetzt.

17. Verfahren nach den Ansprüchen 10 bis 15, gekennzeichnet durch die Verfahrensschritte:
a) der zylindrische Mantel (17) der Konditionierwalze (12) wird einenends im Drehmaschinenfutter einer herkömmlichen Drehmaschine verdrehfest aufgenommen und anderenends vom Reitstock abgestützt,
b) die Leiste (30) wird in einer tangential zur Umfangsfläche (29) des zylindrischen Mantels (17) ausgerichteten und am Werkzeugschlitten befestigten Führung aufgenommen, wobei sie mit ihrem vorderen Ende auf der glatten Umfangsfläche (29) des zylindrischen Mantels (17) an dessen dem Drehmaschinenfutter abgewandten Ende aufgelegt und daran so angeheftet wird, daß ihre Profilierungen (28) im radialer Richtung der Konditionierwalze (12) gesehen außen sind,
c) mit beginnender Rotation des Drehmaschinenfutters und einer gleichzeitigen Vorschubbewegung des Werkzeugschlittens in Richtung des Drehmaschinenfutters wird die Leiste (30) in Form eines ersten Gewindeganges (32) auf die Umfangsfläche (29) des zylindrischen Mantels (17) aufgewickelt und dabei gleichzeitig von einem am Werkzeugschlitten angebrachten Schweißgerät an der dem Drehmaschinenfutter abgewandten Seite mit der Umfangsfläche (29) mit einer I-Naht (33) verschweißt,
d) nach Vollendung der ersten Umdrehung des zylindrischen Mantels (17) werden der erste Gewindegang (32) von der anderen Seite und der zweite Gewindegang (32) gleichzeitig mit der Umfangsfläche (29) des zylindrischen Mantels (17) mit einer Dreiflankennaht (34) verschweißt, was sich kontinuierlich zwischen allen weiteren Gewindegängen (32) bis an das andere Ende der Konditionierwalze (12) fortsetzt.

18. Verfahren nach den Ansprüchen 10 bis 15, gekennzeichnet durch die Verfahrensschritte:
a) der zylindrische Mantel (17) der Konditionierwalze (12) wird einenends im Drehmaschinenfutter einer herkömmlichen Drehmaschine verdrehfest aufgenommen und anderenends vom Reitstock abgestützt,
b) die Leiste (30) wird in einer tangential zur Umfangsfläche (29) des zylindrischen Mantels (17) ausgericheten und am Werkzeugschlitten befestigten Führung aufgenommen, wobei sie mit ihrem vorderen Ende auf der glatten Umfangsfläche (29) des zylindrischen Mantels (17) an dessen dem Drehmaschinenfutter zugewandten Ende aufgelegt und daran so angeheftet wird, daß ihre Profilierungen (28) in radialer Richtung der Konditionierwalze (12) gesehen außen sind,
c) mit beginnender Rotation des Drehmaschinenfutters und einer gleichzeitigen Vorschubbewegung des Werkzeugschlittens in einer Richtung weg vom Drehmaschinenfutter wird die Leiste (30) in Form eines ersten Gewindeganges (32) auf die Umfangsfläche (29) des zylindrischen Mantels (17) aufgewickelt und dabei gleichzeitig von einem am Werkzeugschlitten angebrachten Schweißgerät an der dem Drehmaschinenfutter zugewandten Seite mit der Umfangsfläche (29) mit einer I-Naht (33) verschweißt,
d) nach Vollendung der ersten Umdrehung des zylindrischen Mantels (17) werden der erste Gewindegang (32) von der anderen Seite und der zweite Gewindegang (32) gleichzeitig mit der Umfangsfläche (29) des zylindrischen Mantels (17) mit einer Dreiflankennaht (34) verschweißt, was sich kontinuierlich zwischen allen weiteren Gewindegängen (32) bis zur Mitte der Konditionierwalze (12) fortsetzt.
e) danach wird eine weitere Leiste (30) in die Führung des Werkzeugschlittens eingelegt und mit ihrem vorderen Ende auf die gatte Umfangsfläche (29) des zylindrischen Mantels (17) an dessen dem Drehmaschinenfutter abgewandten Ende aufgelegt und daran so angeheftet, daß ihre Profilierungen (28) in radialer Richtung der Konditionierwalze (12) gesehen außen sind,
f) mit erneut beginnender Rotation des Drehmaschinenfutters und einer gleichzeitigen Vorschubbewegung des Werkzeugschlittens in Richtung des Drehmaschinenfutters wird die Leiste (30) in Form eines ersten Gewindeganges (32) auf die Umfangsfläche (29) des zylindrischen Mantels (17) aufgewickelt und dabei gleichzeitig von einem am Werkzeugschlitten angebrachten Schweißgerät an der dem Drehmaschinenfutter abgewandten Seite mit der Umfangsflache (29) mit einer I-Naht (33) verschweißt.
g) nach Vollendung der ersten Umdrehung des zylindrischen Mantels (17) werden der erste Gewindegang (32) von der anderen Seite und der zweite Gewindegang (32) gleichzeitig mit der Umfangsfläche (29) des zylindrischen Mantels (17) mit einer Dreiflankennaht (34) verschweißt, was sich kontinuierlich zwischen allen weiteren Gewindegängen (32) bis zur Mitte der Konditionierwalze (12) fortsetzt.

19. Verfahren nach den Ansprüchen 10 bis 15, gekennzeichnet durch die Verfährensschritte:
a) der zylindrische Mantel (17) der Konditionierwalze (12) wird einenends im Drehmaschinenfutter einer herkömmlichen Drehmaschine verdrehfest aufgenommen und anderenends vom Reitstock abgestützt,
b) die Leiste (30) wird in einer tangential zur Umfangsfläche (29) des zylindrischen Mantels (17) ausgerichteten und am Werkzeugschlitten befestigten Führung aufgenommen, wobei sie mit ihrem vorderen Ende auf er glatten Umfangsfläche (29) des zylindrischen Mantels (17) in dessen Mitte aufgelegt und daran so angeheftet wird, daß ihre Profilierungen (28) in radialer Richtung der Konditionierwalze (12) gesehen außen sind,
c) mit beginnender Rotation des Drehmaschinenfutters und einer gleichzeitigen Vorschubbewegung des Werkzeugschlittens in einer Richtung weg vom Drehmaschinenfutter wird die Leiste (30) in Form eines ersten Gewindeganges (32) auf die Umfangsfläche (29) des zylindrischen Mantels (17) aufgewickelt und dabei gleichzeitig von einem am Werkzeugschlitten angebrachten Schweißgerät an der dem Drehmaschinenfutter zugewandten Seite mit der Umfangsfläche (29) mit einer I-Naht (33) verschweißt,
d) nach Vollendung der ersten Umdrehung des zylindrischen Mantels (17) werden der erste Gewindegang (32) von der anderen Seite und der zweite Gewindegang (32) gleichzeitig mit der Umfangsfläche (29) des zylindrischen Mantels (17) mit einer Dreiflankennaht (34) verschweißt, was sich kontinuierlich zwischen allen weiteren Gewindegängen (32) bis zum dem Drehmaschinenfutter am weitesten entfernten Ende der Konditionierwalze (12) fortsetzt,
e) danach wird eine weitere Leiste (30) in die Führung des Werkzeugschlittens eingelegt und mit ihrem vorderen Ende auf die glatte Umfangsfläche (29) des zylindrischen Mantels (17) in dessen Mitte aufgelegt und daran so angeheftet, daß ihre Profilierungen (28) in radialer Richtung der Konditionierwalze (12) gesehen außen sind,
f) mit erneut beginnender Rotation des Drehmaschinenfutters und einer gleichzeitigen Vorschubbewegung des Werkzeugschlittens in Richtung des Drehmaschinenfutters wird die Leiste (30) in Form eines ersten Gewindeganges (32) auf die Umfangsfläche (29) des zylindrischen Mantels (17) aufgewickelt und dabei gleichzeitig von einem am Werkzeugschlitten angebrachten Schweißgerät an der dem Drehmaschinenfutter abgewandten Seite mit der Umfangsfläche (29) mit einer I-Naht (33) verschweißt,
g) nach Vollendung der ersten Umdrehung des zylindrischen Mantels (17) werden der erste Gewindegang (32) von der anderen Seite und der zweite Gewindegang (32) gleichzeitig mit der Umfangsfläche (29) des zylindrischen Mantels (17) mit einer Dreiflankennaht (34) verschweißt, was sich kontinuierlich zwischen allen weiteren Gewindegängen (32) bis zu dem dem Drehmaschinenfutter am nächsten liegenden Ende der Konditionierwalze (12) fortsetzt.

20. Verfahren nach den Ansprüchen 10 bis 19, dadurch gekennzeichnet, daß die Leiste (30) an der Umfangsfläche (29) des zylindrischen Mantels (17) durch automatisches Schutzgas-Lichtbogenschweißen befestigt wird.

21. Verfahren nach den Ansprüchen 10 bis 20, dadurch gekennzeichnet, daß die Leiste (30) aus mehreren Stücken besteht, wobei das Ende des augenblicklich verschweißten Stückes und der Anfang des nachfolgenden Stükkes während des automatischen Schutzgas-Lichtbogenschweißens vor Erreichen der Umfangsfläche (29) des zylindrischen Mantels (17) miteinander durch Schweißen verbunden werden.
